# EUROPÄISCHE PATENTSCHRIFT

(11) **EP 2 668 490 B1**
(45) Veröffentlichungstag und Bekanntmachung des Hinweises auf die Patenterteilung: **16.08.2017**
(21) Anmeldenummer: 12708722.9
(22) Anmeldetag: 25.01.2012
(51) Int. Cl.: G01N 21/51, G01N 13/00, G01N 35/00, G01N 15/14

(54) **OPTISCHES ANALYSEVERFAHREN FÜR FLÜSSIGKEIT IN EINEM PROBENBEHÄLTER UND ANALYSEEINRICHTUNG ZUR DURCHFÜHRUNG DES VERFAHRENS**
OPTICAL ANALYSIS METHOD FOR LIQUID IN A SAMPLE CONTAINER AND ANALYSIS DEVICE FOR CARRYING OUT THE METHOD
PROCÉDÉ D'ANALYSE OPTIQUE DE LIQUIDE DANS UNE ÉPROUVETTE ET DISPOSITIF D'ANALYSE POUR LA MISE EN OEUVRE DU PROCÉDÉ

(30) Priorität: 25.01.2011 DE 102011003140
(43) Veröffentlichungstag der Anmeldung: 04.12.2013
(73) Patentinhaber: Hamilton Bonaduz AG, 7402 Bonaduz (CH)
(72) Erfinder: PISON, Daniela, CH-7000 Chur (CH); NEUHÄUSSER-WESPY, Friedrich, CH-8002 Zürich (CH); GLÜKLER, Stefan, CH-7000 Chur (CH); SEEBER, Johann, CH-7000 Chur (CH); GREDIG, Urs, CH-7440 Andeer (CH); SPÖRRI, Michael, CH-7402 Bonaduz (CH)
(74) Vertreter: Müller Hoffmann & Partner
(86) Internationale Anmeldenummer: PCT/EP2012/051087
(87) Internationale Veröffentlichungsnummer: WO 2012/101146

(56) Entgegenhaltungen:
- EP-A2- 2 120 038
- US-A- 5 510 620
- US-A- 6 122 042
- US-A1- 2004 027 569
- US-A1- 2010 027 868

## Beschreibung

Die vorliegende Erfindung betrifft ein Verfahren zur optischen Analyse einer in einem Probenbehälter enthaltenen Probenflüssigkeit, wobei die Probenflüssigkeit wenigstens eine Substanz in wenigstens teilweise gelöster Form enthält. Ferner betrifft die Erfindung eine zur Durchführung des Verfahrens eingerichtete Analyseeinrichtung.

Mittels bekannter optischer Analyseverfahren, wie etwa Streulichtmessungen oder Absorptionsmessungen können in einer Probenflüssigkeit vorhandene, nicht oder nicht vollständig gelöste Partikel einer Substanz erfasst werden. Auf Grundlage solcher Messungen kann dass vollständige Lösen der Substanz in einer Flüssigkeit überprüft werden. Allerdings sind derartige Analyseverfahren insbesondere hinsichtlich der hierfür erforderlichen Detektionseinrichtungen zum Messen von Streulicht bzw. Absorption recht aufwändig.

In der automatisierten Analyse von Probenflüssigkeiten, beispielsweise unter Verwendung einer Dosiervorrichtung, insbesondere eines Pipettierautomaten, kommt es häufig darauf an, dass mit ausreichender Sicherheit das vollständige Auflösen einer zuvor festen Substanz in der Probenflüssigkeit nachgewiesen bzw. überprüft werden soll. Falls die Substanz nur teilweise gelöst sein sollte, kommt es bei solchen automatisierten Analysen in der Regel aber nicht darauf an, den Grad der Auflösung der Substanz exakt bestimmen zu können, so wie dies bei den bekannten Streulicht bzw. Absorptionsverfahren möglich ist.

US 2004/0027569 A1 offenbart ein Verfahren zur Bestimmung des Anteils von aufgelöstem Material eines Feststoffs in einer Flüssigkeit durch Streulichtmessung.

US 5,510,620 lehrt die Erkennung trüber Inhaltsstoffe in Flaschen durch Überwachung der optischen Auflösbarkeit eines Strichmusters durch die in den Flaschen enthaltene Flüssigkeit hindurch.

EP 2 210 038 A2 offenbart die Feststellung der Trübheit von Blutproben durch Betrachtung eines Hintergrundmusters durch die Probe hindurch. Aufgabe der Erfindung ist es, ein optisches Analyseverfahren und eine zugehörige Analyseeinrichtung bereitzustellen, die eine vereinfachte Feststellung des Grads der Auflösung, insbesondere der vollständigen Auflösung einer Substanz in einer Probenflüssigkeit ermöglicht.

Zur Lösung dieser Aufgabe wird vorgeschlagen, dass das Verfahren die in Anspruch 1 definierten Schritte umfasst. Durch die Wahl des optischen Pfads zwischen Bilderfassungsebene und dem Identifikationsmuster, derart, dass die Probenflüssigkeit, insbesondere ein Teilvolumen oder das gesamte Volumen der Probenflüssigkeit im optischen Pfad liegt, erfolgt die Aufnahme des Bildes des Identifikationsmusters durch die Probenflüssigkeit hindurch. Die Bilddaten, von denen erwartet wird, dass Sie das Identifikationsmuster repräsentieren, enthalten aber auch eventuell noch in der Probenflüssigkeit enthaltene Partikel, so dass es im Abbild des Identifikationsmusters Bereiche geben kann, die nicht zweifelsfrei erkannt werden können. Somit kann durch Aufnahme eines Bildes des Identifikationsmusters in einfacher Weise ermittelt werden, ob die in der Probenflüssigkeit zu lösende Substanz vollständig aufgelöst worden ist oder nicht.

Die Bilderfassungsebene wird vorzugsweise durch einen Bildsensor wie etwa CCD-Sensor oder CMOS-Sensor gebildet, der in geeigneter Weise, beispielsweise in einer Kamera, in einer zugehörigen Analyseeinrichtung untergebracht ist.

Bevorzugt wird dem wenigstens einen Probenbehälter eine Lichtquelle zugeordnet. Mittels einer solchen Lichtquelle können für die Erfassung der Bilddaten des Identifikationsmusters die gewünschten Beleuchtungsverhältnisse hergestellt werden.

Hierzu wird weiter vorgeschlagen, dass die bzw. jede Lichtquelle in ihrer Helligkeit eingestellt wird. Die Helligkeit kann dabei beispielsweise in Abhängigkeit der Färbung der Probenflüssigkeit gewählt werden, so dass in einer dunkleren, aber dennoch durchsichtigen Probenflüssigkeit aufgrund einer ausreichenden Beleuchtung die Erfassung des Identifikationsmusters erfolgen kann.

Nach dem Aufnehmen des Bildes des Identifikationsmusters werden die erzeugten Bilddaten ausgewertet und es wird ermittelt, ob das Identifikationsmuster durch die Probenflüssigkeit mit der darin enthaltenen, in der Regel gelösten Substanz hindurch erkennbar ist. Wird das Identifikationsmuster als solches erkannt, kann daraus geschlossen werden, dass sich die Substanz zu einem sehr hohen Grad oder vollständig aufgelöst hat, da die Erkennung des Identifikationsmusters nicht durch ungelöste Substanzpartikel in der Probenflüssigkeit beeinträchtigt worden ist. Dabei wird nach Erkennen des Identifikationsmusters ausgewertet, ob das Identifikationsmuster mit oder ohne Fehlerkorrektur erkannt worden ist. Das Erkennen des Identifikationsmusters unter Einbezug der Fehlerkorrektur im Erkennungsalgorithmus kann einen Hinweis darauf geben, dass das Identifikationsmuster zwar erkannt werden konnte, aber dass es kleinere Fehler im aufgenommenen Bild des Identifikationsmusters gibt. Dies kann beispielsweise auf kleine Substanzpartikel zurückzuführen sein, die noch in ungelöster Form in der Probenflüssigkeit enthalten sind.

Es wird vorgeschlagen, dass bei nicht erkanntem Identifikationsmuster des wenigstens einen Probenbehälters, als Ergebnis das Vorhandensein von nicht gelöster Substanz in der Probenflüssigkeit angenommen wird, insbesondere die Probenflüssigkeit als trübe angenommen wird. Bei nicht erkanntem Identifikationsmuster kann somit in der Regel immer von einer nicht (vollständig) transparenten Probenflüssigkeit ausgegangen werden.

Bei erkanntem Identifikationsmuster des wenigstens einen Probenbehälters wird ermittelt, wie groß die Fehlerkorrektur ist, und es kann daraus abgeleitet werden, ob die Substanz in der Probenflüssigkeit teilweise oder vollständig gelöst ist. Das grundsätzliche Erkennen des Identifikationsmusters kann auch erfolgen, wenn noch kleine oder/und eine geringe Menge von Substanzpartikeln in der Probenflüssigkeit ungelöst vorliegen. Aufgrund der Größe der Fehlerkorrektur kann abgeschätzt werden, wie stark der Grad der Auflösung der Substanz ist, ohne diesen quantitativ tatsächlich bestimmen zu müssen. Es können Fehlerkorrekturwerte bestimmt werden, die auf eine ausreichende Auflösung der Substanz hinweisen und daraus kann eine Freigabe der Probenflüssigkeit des betreffenden Probenbehälters zur weiteren Verarbeitung erfolgen.

Die Helligkeit der Lichtquelle kann in Abhängigkeit der Erkennung des Identifikationsmusters eingestellt werden.

Alternativ oder zusätzlich kann die Belichtungsdauer der Bildaufnahmeeinrichtung in Abhängigkeit der Erkennung des Identifikationsmusters eingestellt werden.

Die oben genannten Verfahrensschritte können wenigstens teilweise mehrfach für den wenigstens einen Probenbehälter durchgeführt werden, wobei vorzugsweise bei jeder erneuten Durchführung die Helligkeit der Lichtquelle oder/und die Belichtungsdauer der Bildaufnahmeeinrichtung verändert wird.

Das mehrfache Durchführen von Schritten zur Erkennung des Identifikationsmusters ermöglicht den Ausschluss von Fehleinschätzungen von nicht erkannten Identifikationsmustern bei einer ersten bzw. einzigen Durchführung einer Erkennung, insbesondere eines Erkennungsalgorithmus.

Die Erfindung betrifft auch eine Analyseeinrichtung zur Durchführung eines oder mehrere der oben beschriebenen Verfahrensschritte, wobei die Analyseeinrichtung die in Anspruch 9 definierten Merkmale umfasst. Vorzugsweise wird von der Lichtquelle stammendes Licht derart geführt, dass es den wenigstens einen Probenbehälter an dessen Unterseite anstrahlt.

Hierzu wird vorgeschlagen, dass die Lichtquelle unterhalb des Aufnahmebehälters bzw. des darin befindlichen wenigstens einen Probenbehälters angeordnet ist.

Vorzugsweise ist die Bildaufnahmeeinrichtung oberhalb des von der Lichtquelle angestrahlten Probenbehälters angeordnet. Als Bildaufnahmeeinrichtung kommen kameraartige Geräte in Betracht, die beispielsweise zu den einzelnen Probenbehältern bewegt werden können, um das zugehörige Identifikationsmuster zu erfassen.

Der Aufnahmebehälter ist bevorzugt derart ausgeführt, dass in ihm mehrere Probenbehälter in der Art einer Matrix mit n Spalten und m Zeilen aufnehmbar sind. Eine besonders bevorzugte Ausprägung des Aufnahmebehälters umfasst 8 Zeilen und 12 Spalten, so dass in ihm 96 Probenbehälter aufgenommen werden können. Dabei ist es zur Durchführung des obigen Verfahrens jedoch nicht erforderlich, dass alle einzelnen Aufnahmeplätze des Aufnahmebehälters mit einem Probenbehälter bestückt sind; der Aufnahmebehälter kann also teilweise oder vollständig mit Probenbehältern gefüllt sein.

In diesem Zusammenhang wird auch darauf hingewiesen, dass die Bildaufnahmeeinrichtung mehrere nebeneinander angeordnete Kameras umfassen kann, die nebeneinander liegende Probenbehälter bzw. deren Identifikationsmuster gleichzeitig aufnehmen können.

Es wird vorgeschlagen, dass die Lichtquelle von mehreren Leuchtdioden gebildet wird, die vorzugsweise in einer der Matrixanordnung des Aufnahmebehälters entsprechenden Weise angeordnet sind, derart, dass jedem Probebehälter des Aufnahmebehälters eine Leuchtdiode zugeordnet werden kann. Es ist auch denkbar, dass jedem Probebehälter mehrere Leuchtdioden zugeordnet sind, um gegebenenfalls mehr Licht für den betreffenden Probenbehälter erzeugen zu können, beispielsweise könnten die Leuchtdioden entsprechend der Matrix des Aufnahmebehälters jeweils paarweise oder als Dreiergruppe angeordnet sein.

Das Identifikationsmuster an dem wenigstens einen Probenbehälter ist vorzugsweise an dessen Unterseite vorgesehen, wobei das Identifikationsmuster vorzugsweise durch verschiedene Bereiche unterschiedlicher Lichtdurchlässigkeit gebildet ist. Als Identifikationsmuster kann beispielsweise ein Barcode in Form eines Strichcodes oder eines zweidimensionalen 2D-Barcodes zum Einsatz kommen.

Es wird vorgeschlagen, dass die Analyseeinrichtung ferner eine Steuereinrichtung umfasst bzw. mit einer solchen in Kommunikationsverbindung steht, die derart eingerichtet ist, dass die Ansteuerung der relativen Bewegungen zwischen Aufnahmebehälter, Lichtquelle und Bildaufnahmeeinrichtung durchführbar ist und dass die zur optischen Analyse der Probenflüssigkeit erforderlichen Verfahrensschritte durchführbar sind.

Die oben beschriebene Analyseeinrichtung ist bevorzugt Teil einer Dosiervorrichtung, insbesondere eines Pipettierautomaten. Dabei kann die oben in Bezug auf die Analyseeinrichtung erwähnte Steuereinrichtung gleichzeitig auch die Steuereinrichtung der Dosiervorrichtung sein, insbesondere im Sinne einer die Dosiervorrichtung ansteuernden ansich bekannten Rechnereinheit mit Prozessor, Speicher, etc. und Kommunikationsanschlüssen zur Übermittlung von Befehlen/Signalen an Bauteile der Dosiervorrichtung bzw. der Analyseeinrichtung.

Das vorgestellte Verfahren wird vorzugsweise mittels eines Computerprogramms durchgeführt, das in einem Speicher der Steuereinrichtung gespeichert und durch einen Prozessor der Steuereinrichtung ausgeführt werden kann.

Die Erfindung wird nachfolgend unter Bezugnahme auf die anliegenden Figuren beispielhaft und nicht einschränkend beschrieben.
- Fig. 1: zeigt eine vereinfachte schematische Teilschnittdarstellung eines Aufnahmebehälters mit Probenbehältern in einer Analyseeinrichtung zum Erfassen von Identifikationsmustern.
- Fig. 2: zeigt eine Draufsicht auf einen Teil des Aufnahmebehälters der Fig. 1 mit sichtbaren Identifikationsmustern.
- Fig. 3: zeigt vereinfacht und schematisch mögliche optische Anordnungen für eine Aufnahmeeinrichtung.
- Fig. 4: zeigt in vergrößerter Darstellung in den Teilfiguren a) bis d) unterschiedliche Konstellationen bei der Erkennung der Identifikationsmuster in der Probenflüssigkeit
- Fig. 5: zeigt ein Flussdiagramm einer Ausführungsform des erfindungsgemäßen Verfahrens.
- Fig. 6: zeigt ein elektrisches Schema für die Ansteuerung einer Ausführungsform einer Lichtquelle für das Verfahren.

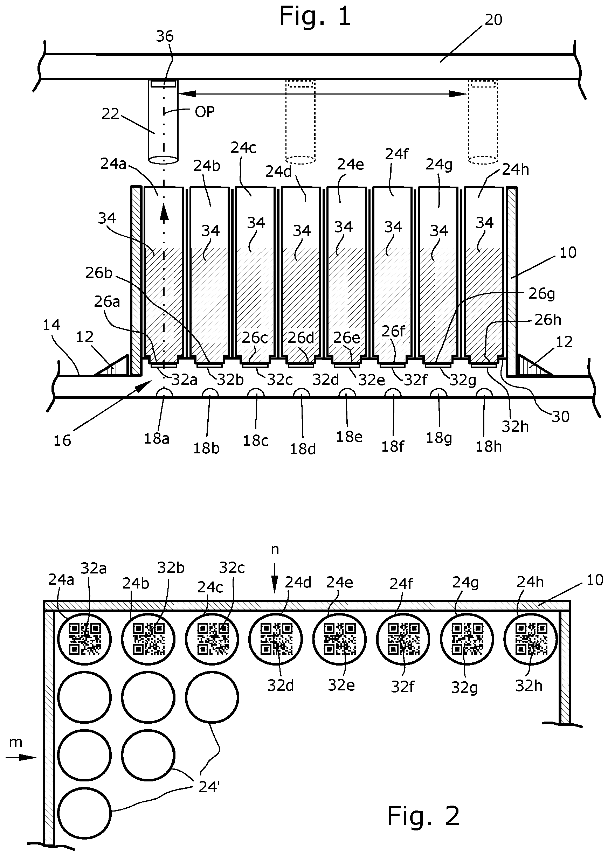

Fig. 1 zeigt in vereinfachter und schematischer Weise einen Aufnahmebehälter 10, der sich in einer nur teilweise dargestellten Dosiervorrichtung, wie etwa einem Pipettierautomaten befindet. Der Aufnahmebehälter ist mittels Führungselementen 12 an einer Position an der Dosiervorrichtung angeordnet, an welcher eine Bodenplatte 14 der Dosiervorrichtung eine Öffnung 16 aufweist. Unterhalb dieser Öffnung 16 ist eine Lichtquelle in Form von mehreren Leuchtdioden 18a-h angeordnet. Oberhalb des Aufnahmebehälters 10 ist ein Träger 20 ersichtlich, an welchem eine Bildaufnahmeeinrichtung 22, wie etwa eine Digitalkamera, vorzugsweise beweglich angebracht ist, was durch den Doppelpfeil und gestrichelt dargestellte Kamerapositionen angedeutet ist. Es ist auch denkbar, dass der Träger 20 insgesamt ein bewegliches Bauteil der Analyseeinrichtung bzw. der Dosiervorrichtung ist.

Im Aufnahmebehälter 10 sind mehrere Probenbehälter 24a-h aufgenommen, wobei diese mit ihrem im Durchmesser etwas verkleinerten unteren Ende 26a-h in entsprechenden Öffnungen im Boden 30 des Aufnahmebehälter 10 stehen. An der Unterseite von jedem Probenbehälter ist mit 32a-h ein dem jeweiligen Probenbehälter zugeordnetes Identifikationsmuster angedeutet. Jeder Probenbehälter 24a-h ist mit einer Probenflüssigkeit 34 befüllt.

Um mittels einer optischen Analyse zu ermitteln, ob eine in der Probenflüssigkeit zu lösende Substanz sich vollständig aufgelöst hat, werden die Probenbehälter 24a-h von unten von der jeweiligen Leuchtdiode 18a-h beleuchtet, so dass die über einem betreffenden Probenbehälter 24a-h angeordnete Kamera 22 ein Bild des jeweiligen Identifikationsmusters 32a-h aufnehmen kann. Das Identifikationsmuster 32a-h weist hierzu für Licht durchlässige und undurchlässige Bereiche auf, wie dies beispielhaft in der Draufsicht gemäß Fig. 2 zu erkennen ist für die Probenbehälter 24a-h und die zugehörigen Identifikationsmuster 32a-h, die hier beispielhaft als 2D-Barcode ausgeführt sind, aber auch jede andere geeignete Codeart sein könnten, wie etwa 1D-Strichcode, zusätzliche Ziffern oder ähnliches.

Unter Bezugnahme auf die Fig. 2 wird auch darauf hingewiesen, dass die Probenbehälter 24a-h, 24' vorzugsweise in einer Matrix im Aufnahmebehälter 10 angeordnet sind. Eine bevorzugte Größe sind Aufnahmebehälter mit 96 Probenbehälter, angeordnet in 8 Spalten (n) und 12 Zeilen (m). Selbstverständlich kann jede andere Größe eines Aufnahmebehälters eingesetzt werden. Es ist auch denkbar, dass die Anordnung der Probenbehälter nicht in Matrixform erfolgt, sondern beispielsweise entlang eines Kreisumfangs bei eine runden Aufnahmebehälter wobei auch innerhalb dieses Umfangs noch weitere Probenbehälter angeordnet sein könnten.

Wie aus der Fig. 1 ersichtlich, verläuft der optische Pfad OP (strich-punktierte Pfeillinie) zwischen der Lichtquelle, hier Leuchtdiode 18a und der Kamera 22 bzw. einem die Bildebene repräsentierenden Bildsensor (CCD, CMOS o.ä.) 36. Dabei liegt die zu untersuchende Probenflüssigkeit 34 zwischen dem Identifikationsmuster 32a und der Bildebene 36, so dass das Identifikationsmuster 32a von der Kamera 22 aus gesehen durch die Probenflüssigkeit 34 hindurch erkannt werden muss. Im vorliegenden Fall durchquert der optische Pfad OP die gesamte Höhe des im Probenbehälter 24a enthaltenen Volumens der Probenflüssigkeit 34. Mit anderen Worten wird mittels der Kamera 22 durch das gesamte Volumen der Probenflüssigkeit 34 hindurch auf das Identifikationsmuster 32a geschaut.

In einer anderen Konstellation wäre es auch denkbar, dass die Kamera nicht von oben, sondern beispielsweise seitlich auf die Probenbehälter ausgerichtet ist und nur durch ein Teilvolumen von Probenflüssigkeit, also nur teilweise durch die Probenflüssigkeit hindurch auf ein entsprechend an einem anderen Ort des Probenbehälters (Seitenwand) angebrachtes Identifikationsmuster blickt. Denkbar ist auch eine Umkehrung der in Fig. 1 dargestellten Lage, etwa in der Weise, dass auf jedem Probenbehälter eine Art Deckel mit Identifikationsmuster angebracht wird, der dann von einer unterhalb der Probenbehälter liegenden Kamera durch die Probenflüssigkeit hindurch aufgenommen wird. Eine Beleuchtung würde in einem solchen Falle von oben auf die Deckel der Probenbehälter erfolgen.

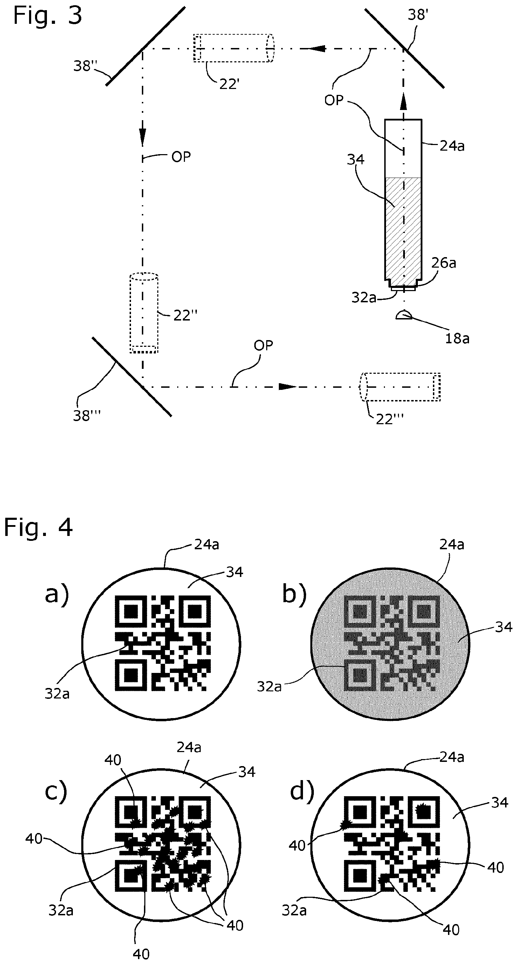

Weitere Alternativen des optischen Pfads OP sind in der Fig. 3 angedeutet. Es ist durchaus denkbar, dass die Kamera 22', 22", 22'" an unterschiedlichen Stellen der Dosiervorrichtung angeordnet ist, wobei durch jeweilige Umlenkmittel 38', 38", 38"', insbesondere Spiegel, der optische Pfad OP bis zur jeweiligen Kamera 22', 22", 22'" geleitet wird. Die hier dargestellten Möglichkeiten der Führung des optischen Pfads sind rein beispielhaft. Je nach Ausgestaltung der zugehörigen Dosiervorrichtung kann der optische Pfad auch in andere Richtungen, um andere Winkel bzw. unter Einbezug von weiteren optischen Bauteilen, wie etwa Linsen und dergleichen geführt werden.

Fig. 4 zeigt in den Teilfiguren a) bis d) unterschiedliche Situationen, wie sie von der Kamera 22 aufgenommen werden können. Fig. 4a zeigt einen Fall mit eindeutig erkennbarem Identifikationsmuster 32a. Die zwischen der Bildebene (Kamera 22 bzw. deren Sensor 36) und dem Identifikationsmuster 32a befindliche Probenflüssigkeit 34 ist dabei transparent bzw. durchsichtig.

Fig. 4b zeigt den Fall mit einer durchsichtigen jedoch dunkler gefärbten Probenflüssigkeit 34, die das Identifikationsmuster 32a abdeckt. In einem solchen Fall ist der Kontrast zwischen schwarzen (lichtundurchlässigen) und helleren (lichtdurchlässigen) Bereichen des Identifikationsmusters 32a weniger stark und kann ggf. zu Schwierigkeiten bei der Erkennung des Identifikationsmusters 32a führen. Hier kann ggf. eine stärkere Helligkeit mittels der zugehörigen Lichtquelle eine bessere Erkennung ermöglichen.

Fig. 4c zeigt schematisch eine Vielzahl von ungelösten Partikeln 40, die sich in der Probenflüssigkeit in ungelöstem Zustand befinden. DieSubstanzpartikel 40 decken größere Bereiche des Identifikationsmusters 32a ab, so dass dieses als solches nicht mehr erkennbar ist. Eine Auswertung der Bilddaten einer solchen Aufnahmen eines Identifikationsmusters führt zum Ergebnis, dass kein Identifikationsmuster erkannt worden ist.

Fig. 4d zeigt einen Fall, bei welchem nur wenige ungelöste Substanzpartikel in der Probenflüssigkeit enthalten sind. Diese decken das Identifikationsmuster 32a an wenigen Stellen ab. Da eine Erkennung mittels eines Erkennungsalgorithmus auch eine Fehlerkorrektur bei der Erkennung des in den Bilddaten gespeicherten Identifikationsmusters umfasst, kann ein in derartiger Weise nur wenig verfälschtes Identifikationsmuster trotzdem als solches erkannt werden, wobei allerdings ein die Fehlerkorrektur repräsentierender Wert eine Größe annimmt, die für das Vorhandensein von Störungen im Identifikationsmuster signifikant ist.

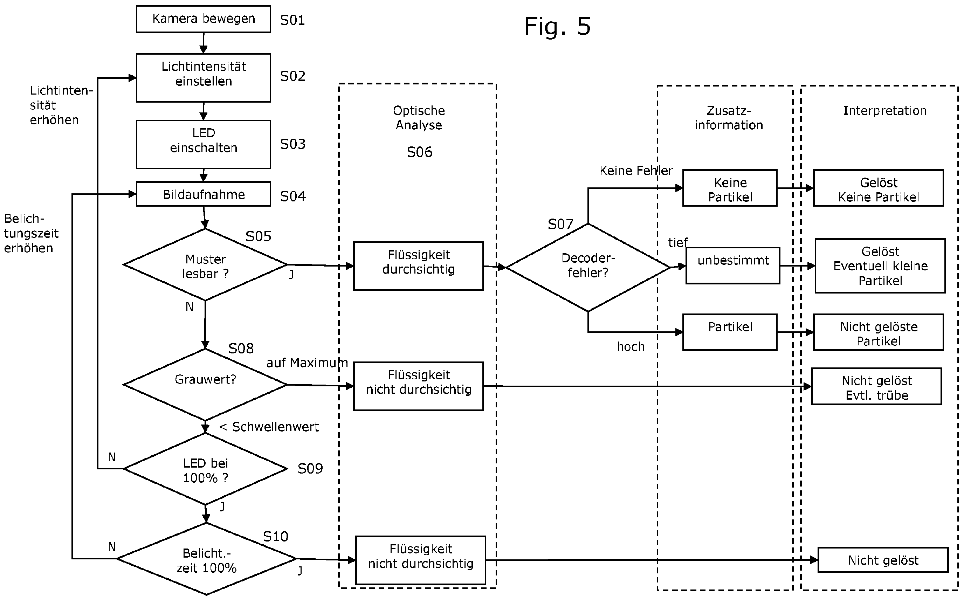

Das mittels einer Analyseeinrichtung bzw. Dosiervorrichtung, wie sie unter Bezugnahme auf die Fig. 1-3 beschrieben worden ist, durchzuführende Verfahren ist anschaulich in Fig. 5 dargestellt. In einem ersten Schritt S01 wird die Kamera 22 bzw. auch mehrere Kameras, in eine Aufnahmeposition oberhalb eines bestimmten Probenbehälters bewegt. In Schritt S02 erfolgt eine Einstellung der Lichtintensität der zugehörigen Lichtquelle, insbesondere einer dem Probenbehälter zugeordneten Leuchtdiode 18a-h, anschließend wird in Schritt S03 die Leuchtdiode eingeschaltet und es erfolgt in Schritt S04 eine Bildaufnahme mit Erfassung von entsprechenden Bilddaten des durch die Probenflüssigkeit hindurch aufgenommenen Identifikationsmusters des betreffenden Probenbehälters. In Schritt S05 wird ausgewertet, ob das Identifikationsmuster lesbar ist. Dieser Schritt erfolgt im Rahmen eines Erkennungsalgorithmus. Sofern das Identifikationsmuster lesbar ist, wird bei einer optischen Analyse S06 festgestellt, dass die Probenflüssigkeit durchsichtig bzw. transparent ist. In Schritt S07 wird dann überprüft, ob es beim Erkennen des Identifikationsmusters, also beim Dekodieren der im Identifikationsmuster enthaltenen Informationen, Fehler gegeben hat, welche durch die Fehlerkorrektur gegebenenfalls berücksichtigt bzw. korrigiert worden sind. Liegen keine Fehler vor, wird angenommen, dass die Erkennung bzw. Dekodierung des Identifikationsmusters ohne Aktivierung der Fehlerkorrektur erfolgt ist bzw. dass der die Fehlerkorrektur repräsentierende Wert einem vorbestimmten Sollwert, z.B. Null, entspricht. Hieraus kann als Zusatzinformation zum Ergebnis der optischen Analyse die Information gewonnen werden, dass keine Substanzpartikel mehr vorliegen und somit alle Partikel in der Probenflüssigkeit aufgelöst worden sind. Diese Information kann dann als Interpretation bzw. Ergebnis der optischen Analyse/Erkennung des Identifikationsmusters für den betreffenden Probenbehälter gespeichert und weiterverarbeitet werden.

Ist die Fehlerkorrektur gering (tief), wird von einer nicht genauer bestimmten (unbestimmten) Zusatzinformation ausgegangen. Diese lässt den Schluss bzw. die Interpretation zu, dass entweder alle Partikel gelöst sind oder aber noch ein paar wenige kleine Partikel in der Probenflüssigkeit ungelöst vorhanden sind. In einem solchen Fall kann gegebenenfalls ein Schwellenwert für die Fehlerkorrektur implementiert sein, dessen Unter- bzw. Überschreiten ein vollständige Lösung der Partikel als Ergebnis ausgibt oder aber auf ungelöste Partikel hinweist.

Ist die Fehlerkorrektur hoch, wird davon ausgegangen, dass es noch ungelöste Partikel in der Probenflüssigkeit hat, somit muss mit einer weiteren Verwendung der Probenflüssigkeit noch gewartet werden bis auch diese Partikel sich aufgelöst haben. Dies kann beispielsweise nach einer bestimmten Zeitdauer erneut mittels der optischen Analyse überprüft werden.

Wird in Schritt S05 festgestellt, dass das Identifikationsmuster nicht lesbar ist, wird ein Grauwert überprüft (S08), welcher die Transparenz der Probenflüssigkeit repräsentiert. Falls dieser Grauwert ein Maximum erreicht, wird davon ausgegangen, dass die Probenflüssigkeit nicht durchsichtig ist. Hieraus kann geschlossen werden, dass noch sehr viele ungelöste Substanzpartikel in der Probenlösung vorhanden sind oder aber die Probenflüssigkeit eine sehr dunkle Farbe hat, welche nicht die erforderliche Transparenz zur Detektion des Identifikationsmusters bietet. Liegt der Grauwert unterhalb eines bestimmten Schwellenwerts wird in Schritt S09 geprüft, ob die Helligkeit der Leuchtdiode bereits 100% beträgt. Ist dies nicht der Fall, wird die Helligkeit erhöht und es erfolgt eine erneute Analyse bei Schritt S02. Falls die Lichtintensität bereits 100% beträgt (S09) wird überprüft, ob die Belichtungszeit der Kamera bereits zu 100% ausgenutzt worden ist (S10). Ist dies der Fall wird in S06 festgestellt, dass die Probenflüssigkeit nicht durchsichtig ist und hieraus geschlossen, dass die Substanzpartikel nicht gelöst sind. Falls die Beleuchtungszeit noch nicht 100% beträgt, wird nach Erhöhung der Belichtungszeit eine weitere Bildaufnahme (S04) durchgeführt und eine erneute optische Analyse durchgeführt.

Wie aus dem Ablaufschema ersichtlich, können Parameter wie die Lichtintensität (Helligkeit) der Lichtquelle und die Belichtungszeit der Kamera bei nicht lesbarem bzw. nicht erkanntem Identifikationsmuster verändert werden und die optische Analyse kann mit den veränderten, insbesondere erhöhten Parametern noch einmal durchgeführt werden. Hierdurch wird ermöglicht, dass anfänglich in einer ersten Analyse nicht erkannte Identifikationsmuster gegebenenfalls mit veränderten Parametern einwandfrei erkennbar sind. Somit können Fehler bei der Erkennung verringert bzw. vermieden werden.

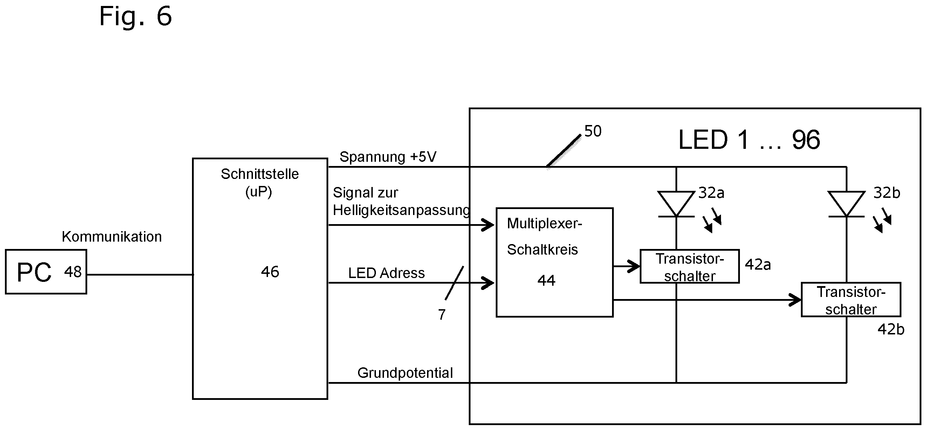

Fig. 6 zeigt schließlich in schematischer Darstellung die Ansteuerung von Leuchtdioden 32a, 32b eines Array von vorzugsweise 96 Leuchtdioden. Die Leuchtdioden 32a, 32b werden über jeweilige Transistorschalter 42a, 42b geschaltet, die mit einem Multplexer-Schaltkreis 44 verbunden sind. Der Multiplexer-Schaltkreis 44 erhält hierzu von einer mit einem Rechner (PC) 48 verbundenen Schnittstelle 46 ein Signal zur Anpassung der Helligkeit (Lichtintensität) und eine Information über die Adresse der Leuchtdiode, d.h. Welche Leuchtdiode des Arrays mit der gewünschten Helligkeit zum Leuchten gebracht werden soll. Der Rechner (PC) 48 ist in der Regel Teil der Dosiervorrichtung, insbesondere Pipettierautomaten. Die Energieversorgung der Leuchtdioden 32a, 32b erfolgt im vorliegenden Beispiel über eine Versorgungsleitung 50 mit einer Spannung von 5V.

Das hier vorgestellte optische Analyseverfahren nutzt das Vorhandensein von Identifikationsmustern an Probenbehältern, um durch den Grad der Erkennbarkeit des Musters Rückschlüsse auf die Transparenz der im Probenbehälter aufgenommenen Probenflüssigkeit ziehen zu können. Sie stellt somit eine einfache und kostengünstige Art der Qualitätssicherung dar, wenn es darum geht festzustellen, ob eine Substanz sich in der Probenflüssigkeit aufgelöst hat.

## Patentansprüche

1. Verfahren zur optischen Analyse einer in einem Probenbehälter (24a-h) enthaltenen Probenflüssigkeit (34), wobei die Probenflüssigkeit (34) wenigstens eine Substanz (40) in wenigstens teilweise gelöster Form enthält, umfassend die Schritte:
Bereitstellen von wenigstens einem mit Probenflüssigkeit (34) gefüllten Probenbehälter (24a-h), an dem ein Identifikationsmuster (32a-h) angebracht ist;
Beleuchten des wenigstens einen Probenbehälters (24a-h) und des Identifikationsmusters mittels einer Lichtquelle (18a-h); und
Erfassen eines Bildes des an dem wenigstens einen Probenbehälter (24a-h) angebrachten Identifikationsmusters (32a-h) mittels einer Bilddaten erzeugenden Bildaufnahmeeinrichtung (22), wobei der optische Pfad (OP) derart gewählt wird, dass die in dem wenigstens einen Probenbehälter (24a-h) enthaltene Probenflüssigkeit (34) wenigstens teilweise zwischen der Bildaufnahmeebene (36) der Bildaufnahmeeinrichtung (22) und dem jeweiligen Identifikationsmuster (32a-h) des Probenbehälters (24a-h) liegt, wobei nach dem Aufnehmen des Bildes des Identifikationsmusters (32a-h) die erzeugten Bilddaten ausgewertet werden und unter Einbezug einer Fehlerkorrektur eines Erkennungsalgorithmus ermittelt wird, ob das Identifikationsmuster (32a-h) durch die Probenflüssigkeit (34) hindurch erkennbar ist (S05, S06), und wobei bei erkanntem Identifikationsmuster (32a-h) des wenigstens einen Probenbehälters (24a-h) ermittelt wird, wie groß die Fehlerkorrektur ist, und daraus abgeleitet wird,
ob die Substanz (40) in der Probenflüssigkeit (34) teilweise oder vollständig gelöst ist.

2. Verfahren nach Anspruch 1, wobei dem wenigstens einen Probenbehälter (24a-h) eine Lichtquelle (18a-h) zugeordnet wird.

3. Verfahren nach Anspruch 1 oder 2, wobei die bzw. jede Lichtquelle (18a-h) in ihrer Helligkeit eingestellt wird.

4. Verfahren nach einem der vorhergehenden Ansprüche, wobei nach Erkennen des Identifikationsmusters (32a-h) ausgewertet wird, ob das Identifikationsmuster (32a-h) mit einem Wert der Fehlerkorrektur erkannt worden ist, der einer fehlerfreien Erkennung entspricht oder mit einem Wert der Fehlerkorrektur erkannt worden ist, der dem Vorhandensein von ungelösten Partikeln entspricht (S07).

5. Verfahren nach einem der vorhergehenden Ansprüche, wobei bei nicht erkanntem Identifikationsmuster (32a-h) des wenigstens einen Probenbehälters (24a-h), als Ergebnis das Vorhandensein von nicht gelöster Substanz (40) in der Probenflüssigkeit (34) angenommen wird, insbesondere die Probenflüssigkeit (34) als trübe angenommen wird.

6. Verfahren nach einem der Ansprüche 2 bis 5, wobei die Helligkeit der Lichtquelle (18a-h) in Abhängigkeit der Erkennung des Identifikationsmusters (32a-h) eingestellt wird (S09).

7. Verfahren nach einem der Ansprüche 2 bis 6, wobei die Belichtungsdauer der Bildaufnahmeeinrichtung (22) in Abhängigkeit der Erkennung des Identifikationsmusters (32a-h) eingestellt wird (S10).

8. Verfahren nach einem der Ansprüche 2 bis 7, wobei die Verfahrensschritte zur Erkennung des Identifikationsmusters (32a-h) wenigstens teilweise mehrfach für den wenigstens einen Probenbehälter (24a-h) durchgeführt werden, wobei vorzugsweise bei jeder erneuten Durchführung die Helligkeit der Lichtquelle (18a-h; S09) oder/und die Belichtungsdauer der Bildaufnahmeeinrichtung (22; S10) verändert wird.

9. Analyseeinrichtung zur Durchführung des Verfahrens nach einem der vorhergehenden Ansprüche, wobei die Analyseeinrichtung umfasst: wenigstens einen in einem Aufnahmebehälter (10) gehaltenen Probenbehälter (24a-h), an dem ein jeweiliges Identifikationsmuster (32a-h) vorhanden ist, wenigstens eine Lichtquelle (18a-h) zur Beleuchtung des wenigstens einen in dem Aufnahmebehälter (10) gehaltenen Probenbehälters (24a-h) und des jeweiligen Identifikationsmusters (32a-h), wobei der Aufnahmebehälter und die Lichtquelle (18a-h) relativ zueinander beweglich sind,
wenigstens eine Bildaufnahmeeinrichtung (22) zur Erfassung des jeweiligen Identifikationsmusters (32a-h) des wenigstens einen Probenbehälters (24a-h), wobei die Bildaufnahmeeinrichtung und der Aufnahmebehälter (10) relativ zueinander beweglich angeordnet sind,
wobei die Bildaufnahmeeinrichtung (22) bezogen auf den optischen Pfad (OP) derart an der Analyseeinrichtung vorgesehen ist, dass die in dem wenigstens einen Probenbehälter (24a-h) enthaltene Probenflüssigkeit (34) wenigstens teilweise zwischen der Bildaufnahmeebene (36) der Bildaufnahmeeinrichtung (22) und dem jeweiligen Identifikationsmuster (32a-h) des Probenbehälters (24a-h) liegt, wobei sie ferner eine Steuereinrichtung umfasst, die zur Durchführung der zur optischen Analyse der Probenflüssigkeit (34) erforderlichen Verfahrensschritte gemäß Anspruch 1 eingerichtet ist.

10. Analyseeinrichtung, nach Anspruch 9, wobei von der Lichtquelle (18a-h) stammendes Licht derart geführt wird, dass es den wenigstens einen Probenbehälter (24a-h) an dessen Unterseite anstrahlt, an der vorzugsweise das jeweilige Identifikationsmuster (32a-h) angebracht ist, wobei das Identifikationsmuster (32a-h) durch verschiedene Bereiche unterschiedlicher Lichtdurchlässigkeit gebildet ist.

11. Analyseeinrichtung nach Anspruch 10, wobei die Lichtquelle (18a-h) unterhalb des Aufnahmebehälters (10) bzw. des darin befindlichen wenigstens einen Probenbehälters (24a-h) angeordnet ist, und wobei vorzugsweise die Bildaufnahmeeinrichtung (22) oberhalb des von der Lichtquelle (18a-h) angestrahlten Probenbehälters (24a-h) angeordnet ist.

12. Analyseeinrichtung nach einem der Ansprüche 9 bis 11, wobei der Aufnahmebehälter (10) derart ausgeführt ist, dass in ihm mehrere Probenbehälter (24a-h) in der Art einer Matrix mit n Spalten und m Zeilen aufnehmbar sind, und wobei die Lichtquelle von mehreren Leuchtdioden (18a-h) gebildet wird, die vorzugsweise in einer der Matrixanordnung des Aufnahmebehälters (10) entsprechenden Weise angeordnet sind, derart, dass jedem Probebehälter (24a-h) des Aufnahmebehälters (10) eine Leuchtdiode (18a-h) zugeordnet werden kann.

13. Analyseeinrichtung nach einem der Ansprüche 9 bis 12, wobei die Steuereinrichtung derart eingerichtet ist, dass die Ansteuerung der relativen Bewegungen zwischen Aufnahmebehälter (10), Lichtquelle (18a-h) und Bildaufnahmeeinrichtung (22) durchführbar ist.

14. Analyseeinrichtung nach einem der Ansprüche 9 bis 13, wobei sie Teil einer Dosiervorrichtung, insbesondere eines Pipettierautomaten ist.

## Claims

1. A method for the optical analysis of a sample liquid (34) contained in a sample container (24a-h), wherein the sample liquid (34) contains at least one substance (40) in an at least partly dissolved form, comprising the steps of:
providing at least one sample container (24a-h) filled with a sample liquid (34) and wherein an identification pattern is arranged on the sample container;
illuminating the at least one sample container (24a-h) and the identification pattern by means of a light source (18a-h); and
capturing an image of an identification pattern (32a-h) arranged on the at least one sample container (24a-h) by means of an image recording device (22) which generates image data, wherein the optical path (OP) is selected in such a way that the sample liquid (34) contained in the at least one sample container (24a-h) is at least partly situated between the image recording plane (36) of the image recording device (22) and the respective identification pattern (32a-h)of the sample container (24a-h), wherein, after the image of the identification pattern (32a-h) has been recorded, the generated image data are evaluated and it is established whether the identification pattern (32a-h) can be identified (S05, S06) through the sample liquid (34), and
wherein, if the identification pattern (32a-h) of the at least one sample container (24a-h) is identified, it is established how large the error correction is and derived therefrom whether the substance (40) is partly or completely dissolved in the sample liquid (34).

2. The method as claimed in claim 1, wherein a light source (18a-h) is associated with the at least one sample container (24a-h).

3. The method as claimed in claim 1 or 2, wherein the light source (18ah) or each light source is set in terms of its brightness.

4. The method as claimed in one of the preceding claims, wherein, after identifying the identification pattern (32a-h), it is established whether the identification pattern (32a-h) was identified (S07) with an error correction value which corresponds to an identification without error or with an error correction value which corresponds to the presence of undissolved substances (S07).

5. The method as claimed in one of the preceding claims, wherein, if the identification pattern (32a-h) of the at least one sample container (24a-h) is not identified, the presence of an undissolved substance (40) in the sample liquid (34) is assumed as a result; in particular, the sample liquid (34) is assumed to be turbid.

6. The method as claimed in one of claims 2 to 5, wherein the brightness of the light source (18a-h) is set (S09) depending on the identification of the identification pattern (32a-h).

7. The method as claimed in one of claims 2 to 6, wherein the exposure duration of the image recording device is set (S10) depending on the identification of the identification pattern (32a-h).

8. The method as claimed in one of claims 2 to 7, wherein the method steps (S02-S10) are at least in part carried out several times for the at least one sample container (24a-h), wherein, preferably, in the case of each renewed run-through, the brightness of the light source (18a-h; S09) and/or the exposure duration of the image recording device (22; S10) is modified.

9. An analysis device for carrying out the method as claimed in one of the preceding claims, wherein the analysis device comprises:
at least one sample container (24a-h) held in a holding container (10) and wherein a respective identification pattern (32a-h) is arranged on the sample container, at least one light source (18a-h) for illuminating the at least one sample container (24a-h) held in the holding container (10) and the respective identification pattern (32a-h), wherein the holding container and the light source (18a-h) can be moved relative to one another
at least one image recording device for capturing the respective identification pattern (32a-h) of the at least one sample container (24a-h), wherein the image recording device and the holding container are arranged in such a way that they can move relative to one another, wherein, in relation to the optical path (OP), the image recording device is provided on the analysis device in such a way that the sample liquid (34) contained in the at least one sample container (24a-h) is at least partly situated between the image recording plane (36) of the image recording device (22) and the respective identification pattern (32a-h), wherein it furthermore comprises a control device, which is configured in such a way that the method steps required for the optical-analysis of the sample liquid (34) can be carried out.

10. The analysis device as claimed in claim 9, wherein light originating from the light source (18a-h) is guided in such a way that it irradiates the at least one sample container (24a-h) on the underside thereof, on which the respective identification pattern (32a-h) is preferably arranged, wherein the identification pattern (32a-h) is formed by various regions with different light transmission properties.

11. The analysis device as claimed in claim 10, wherein the light source (18a-h) is arranged below the holding container or the at least one sample container (24a-h) situated therein and wherein, preferably, the image recording device is arranged above the sample container (24a-h) irradiated by the light source (18a-h).

12. The analysis device as claimed in one of claims 9 to 11, wherein the holding device is embodied in such a way that a plurality of sample containers (24a-h) can be held therein in the style of a matrix with n columns and m rows, and wherein the light source is formed by a plurality of light-emitting diodes (18a-h), which are preferably arranged, in a manner corresponding to the matrix arrangement of the holding container, in such a way that a light-emitting diode (18a-h) can be associated with each sample container of the holding container.

13. The analysis device as claimed in one of claims 9 to 12, wherein the control device is configured in such a way that the actuation of the relative movements between holding container, light source (18a-h) and image recording device can be carried out.

14. The analysis device as claimed in one of claims 9 to 13, wherein it is part of a metering apparatus, in particular an automated pipetter.

## Revendications

1. Procédé pour l'analyse optique d'un échantillon liquide (34) contenu dans un récipient d'échantillon (24ah), l'échantillon liquide (34) contenant au moins une substance (40) sous une forme au moins en partie dissoute, comprenant les étapes suivantes :
préparation d'au moins un récipient d'échantillon (24a-h), rempli d'échantillon liquide (34), sur lequel est prévu un motif d'identification (32a-h) ;
éclairage du ou des récipients d'échantillon (24a-h) et du motif d'identification à l'aide d'une source lumineuse (18a-h) ; et
détection d'une image du motif d'identification (32ah), prévu sur le ou les récipients d'échantillon (24a-h), à l'aide d'un dispositif de prise de vue (22) qui génère des données d'image, le trajet optique (OP) étant choisi pour que l'échantillon liquide (34) contenu dans le ou les récipients d'échantillon (24a-h) se trouve au moins en partie entre le plan de prise de vue d'image (36) du dispositif de prise de vue (22) et le motif d'identification respectif (32a-h) du récipient d'échantillon (24a-h), après la prise de vue du motif d'identification (32a-h) les données d'image générées étant analysées et on détermine, en tenant compte d'une correction d'erreur d'un algorithme de reconnaissance, si le motif d'identification (32a-h) peut être reconnu à travers l'échantillon liquide (34) (S05, S06), et si le motif d'identification (32a-h) du ou des récipients d'échantillon (24a-h) est reconnu, on détermine l'importance de la correction d'erreur et on en déduit si la substance (40) contenue dans l'échantillon liquide (34) est en partie ou entièrement dissoute.

2. Procédé selon la revendication 1, selon lequel une source lumineuse (18a-h) est associée au(x) récipient(s) d'échantillon (24a-h).

3. Procédé selon la revendication 1 ou 2, selon lequel la ou chaque source lumineuse (18a-h) est réglée en luminosité.

4. Procédé selon l'une des revendications précédentes, selon lequel après la reconnaissance du motif d'identification (32a-h), on procède à une analyse pour voir si le motif d'identification (32a-h) a été reconnu avec une valeur de correction d'erreur qui correspond à une reconnaissance sans erreur, ou avec une valeur de correction d'erreur qui correspond à la présence de particules non dissoutes (S07).

5. Procédé selon l'une des revendications précédentes, selon lequel si le motif d'identification (32a-h) du ou des récipients d'échantillon (24a-h) n'est pas reconnu, le résultat supposé est la présence de substance (40) non dissoute dans l'échantillon liquide (34), et on suppose en particulier que ledit échantillon liquide (34) est trouble.

6. Procédé selon l'une des revendications 2 à 5, selon lequel la luminosité de la source lumineuse (18a-h) est réglée en fonction de la reconnaissance du motif d'identification (32a-h) (S09).

7. Procédé selon l'une des revendications 2 à 6, selon lequel la durée d'éclairage du dispositif de prise de vue (22) est réglée en fonction de la reconnaissance du motif d'identification (32a-h) (S10).

8. Procédé selon l'une des revendications 2 à 7, selon lequel les étapes de procédé pour la reconnaissance du motif d'identification (32a-h) sont réalisées au moins en partie plusieurs fois pour le ou les récipients d'échantillon (24a-h), la luminosité de la source lumineuse (18a-h ; S09) ou/et la durée d'éclairage du dispositif de prise de vue (22 ; S10) étant de préférence modifiées à chaque répétition.

9. Dispositif d'analyse pour la mise en oeuvre du procédé selon l'une des revendications précédentes, le dispositif d'analyse comprenant : au moins un récipient d'échantillon (24a-h), retenu dans un récipient de réception (10), sur lequel il y a un motif d'identification respectif (32a-h), au moins une source lumineuse (18a-h) pour éclairer le ou les récipients d'échantillon (24a-h) retenus dans le récipient de réception (10) et le motif d'identification respectif (32a-h), le récipient de réception et la source lumineuse (18a-h) étant mobiles l'un par rapport à l'autre, au moins un dispositif de prise de vue (22) pour détecter le motif d'identification respectif (32a-h) du ou des récipients d'échantillon (24a-h), le dispositif de prise de vue et le récipient de réception (10) étant mobiles l'un par rapport à l'autre, le dispositif de prise de vue (22) étant prévu sur le dispositif d'analyse, par rapport au trajet optique (OP), de telle sorte que l'échantillon liquide (34) contenu dans le ou les récipients d'échantillon (24a-h) se trouve au moins en partie entre le plan de prise de vue (36) du dispositif de prise de vue (22) et le motif d'identification respectif (32a-h) du récipient d'échantillon (24a-h), comprenant également un dispositif de commande qui est conçu pour réaliser les étapes de procédé selon la revendication 1 qui sont nécessaires pour l'analyse optique de l'échantillon liquide (34).

10. Dispositif d'analyse selon la revendication 9, dans lequel la lumière provenant de la source lumineuse (18a-h) est guidée de manière à éclairer le ou les récipients d'échantillon (24a-h) sur leur côté inférieur sur lequel le motif d'identification (32a-h) est formé par différentes zones de translucidités différentes.

11. Dispositif d'analyse selon la revendication 10, dans lequel la source lumineuse (18a-h) est disposée au-dessous du récipient de réception (10) et du ou des récipients d'échantillon (24a-h) qui se trouvent dans celui-ci, et de préférence le dispositif de prise de vue (22) est disposé au-dessus du récipient d'échantillon (24ah) éclairé par la source lumineuse (18a-h).

12. Dispositif d'analyse selon l'une des revendications 9 à 11, dans lequel le récipient de réception (10) est conçu de telle sorte que plusieurs récipients d'échantillon (24a-h) puissent y être reçus à la manière d'une matrice avec n colonnes et m lignes, et la source lumineuse est formée par plusieurs diodes lumineuses (18a-h) qui sont disposées de préférence d'une manière correspondant à la disposition de matrice du récipient de réception (10), de sorte qu'à chaque récipient d'échantillon (24a-h) du récipient de réception (10) peut être associée une diode lumineuse (18a-h).

13. Dispositif d'analyse selon l'une des revendications 9 à 12, dans lequel le dispositif de commande est conçu pour que la commande des mouvements relatifs entre le récipient de réception (10), la source lumineuse (18a-h) et le dispositif de prise de vue (22) puisse être réalisée.

14. Dispositif d'analyse selon l'une des revendications 9 à 13, qui fait partie d'un dispositif de dosage, en particulier d'un dispositif de pipetage automatique.
